# EUROPEAN PATENT APPLICATION

(11) **EP 0 710 955 A2**
(43) Date of publication of application: **08.05.1996**
(21) Application number: 95117094.3
(22) Date of filing: 30.10.1995
(51) Int. Cl.: G11B 19/02, G11B 19/04, G11B 25/04, G11B 31/00, G11B 33/14, G11B 33/12

(54) **Data storage apparatus**

(30) Priority: 02.11.1994 JP 269519/94; 07.12.1994 JP 303345/94
(71) Applicant: HITACHI, LTD., Chiyoda-ku, Tokyo 100 (JP)
(72) Inventor: Takano, Hisashi, Kodaira-shi (JP); Kato, Yasuhiro, Nishitama-gun, Tokyo (JP); Shiroishi, Yoshihiro, Hachioji-shi (JP); Suzuki, Ryo, Hachioji-shi (JP); Yoshida, Takashi, Higashiibaraki-gun, Ibaraki-ken (JP); Nishida, Hiroshi, Naka-gun, Kanagawa-ken (JP); Saito, Akira, Odawara-shi (JP); Ochi, Keiichi, Odawara-shi (JP); Kodama, Koji, Odawara-shi (JP)
(74) Representative: Strehl Schübel-Hopf Groening & Partner

(57) **Abstract**

A data storage apparatus made up of a storage unit including at least a magnetic head (2, 19), a storage medium (1, 18), a spindle (3) and an actuator (4, 22), and a controller unit including a terminal for interface, a controller (13) for controlling the positioning of the magnetic head and the read/write operation in the storage unit, an LSI (11) for encoding and decoding a servo signal, an LSI (10) for signal processing and a circuit board, the storage unit and the controller unit being assembled within separate structures, respectively. Thus, any type of such storage unit can be combined with an arbitrary type of such controller unit in accordance with the use and purpose. Since the storage unit and the controller unit are constructed within separate structures, respectively, the data storage apparatus can be separated into the storage unit and the controller unit. Then, for example, only the storage unit having secret information previously stored can be carried, while the controller unit can be left plugged in a slot. In this case, since the structures of the storage unit and the controller unit are made thin, it is very convenient to carry them.

## Description

### BACKGROUND OF THE INVENTION

This invention relates to portable, small and thin magnetic data storage hard disks, and particularly to portable data storage apparatus suitable for PCMCIA standard.

The conventional data storage apparatus using hard disk media has a storage unit formed of magnetic heads, magnetic disks, spindle and actuator, and a controller unit formed of a controller for controlling the storage unit, an LSI for encoding and decoding a servo signal, a signal-processing LSI, cache, terminals for interface and circuit boards. These storage unit and controller unit are built up within the same structure or combined into a single unit, so that they cannot be separated when used. An example of the conventional storage apparatus has a card-type package including control circuits and a head disk assembly package combined to the card-type package to be inseparable as disclosed in JP-A-5-181565. The conventional magnetic disk data storage apparatus of this type has the following drawbacks.
(1) Since the circuit system and the mechanical system cannot be separated, it is not possible to change the construction of the circuit system according to the purpose and use and select an arbitrary storage capacity if necessary.
(2) Although the storage apparatus is reduced in its thickness by decreasing the number of disks, the thickness of the head slider and the height of the actuator and spindle motor, reduction in the thickness of the LSIs constituting the circuit system is limited and it cannot be extremely reduced unless bear-chip packaging is introduced or like means are used. For example, the commercially available card-type storage apparatus of PCMCIA type-3 has the dimensions 10.8 mm X 54 mm in footprint area which is the same as the credit card or the like, but it has a large-thickness of 10.5 mm and a considerable weight of about 60 g which are unsuitable for portable equipment.
(3) Since the head/medium system and the circuit system are combined, the apparatus is difficult to be reduced in its cost.

In recent years, the SYQUEST Co., Ltd. has marketed the data storage apparatus from which only the magnetic hard disk media can be separated or detachable. This apparatus, however, has the problem that headcrash is highly in danger of occurring because dust is often attached on the surfaces of media when the media are replaced by new ones. Therefore, it is fundamentally difficult to achieve high-density recording by reducing the head-media spacing.

Another example is proposed in which the storage unit formed of head, media, R/W IC and the controller unit are independently used as, for example, disclosed in JP-A-5-210962. In this conventional example, however, since the controller unit is incorporated in a computer body, it cannot be replaced, and its functions cannot be changed or added with other functions.

### SUMMARY OF THE INVENTION

It is an object of the invention to provide an ultra-thin, portable data storage apparatus which is easy to handle and has a good extendability and which is extremely highly reliable and inexpensive.

The problems previously mentioned are solved by constructing, within respective separate structures, a storage unit formed of at least one head/medium, spindle and actuator, and a controller unit formed of at least one terminal for interface, controller for controlling the head positioning and the read/write operation in the storage unit, an LSI for encoding and decoding a servo signal, signal-processing LSI and circuit board, and by combining a desired controller unit and a desired mechanical unit in accordance with purpose and use in order to make a data storage apparatus.

The first feature (1) of the invention is that the data storage apparatus of the invention includes a storage unit having at least a magnetic head for making read/write operation, a magnetic disk for storing information, a spindle motor for rotating the magnetic disk and an actuator for driving the magnetic head to move to a desired position on the magnetic disk along the radius, and a controller unit having at least one of a controller for positioning the head in the storage unit and for controlling information to be written and read, an LSI for encoding and decoding a servo signal, an LSI for signal processing and a circuit board, the storage unit and the controller unit being constructed within respective different structures so as to be carried independently.

Preferably, the following modifications (2) to (11) should be made in the first feature (1) of the invention.
(2) The storage unit and the controller unit are connected by connectors which are mounted on the outside of the data storage apparatus.
(3) The storage unit and the controller unit are connected by a connector which is mounted on the storage unit or the controller unit.
(4) The structure of the controller unit drives at least one structure of the storage unit.
(5) The structure of the storage unit is driven by at least one structure of the controller unit.
(6) A cache memory is incorporated in the structure of the storage unit.
(7) A cache memory is incorporated in the structure of the controller unit.
(8) The cache memory may be an IC memory.
(9) The controller unit has a function other than the magnetic storage function.
(10) The controller unit has a communication function in addition to the modification (9).
(11) The controller unit has a function of compressing and expanding the stored information in addition to the modification (9).

The second feature (12) of the invention is that in items (1) to (11) the size of each structure of the storage unit and the controller unit is 5 mm or below in thickness, 54 mm or below in width and 85.6 mm or below in length.

The third feature (13) of the invention is that in items (1) to (12) the storage unit constituting the data storage apparatus has at least one magnetic disk, at least one actuator, at least one magnetic head and at least one R/W IC.

The fourth feature (14) of the invention is that in items (1) to (12) the storage unit constituting the data storage apparatus has at least two spindles, at least two magnetic disks, and at least two actuators so that data can be transferred in parallel by at least two magnetic disks.

The fifth feature (15) of the invention is that in items (1) to (12) any one of the controller unit and the storage unit constituting the data storage apparatus has a PCMCIA interface.

The sixth feature (16) of the invention is that in items (1) to (12) the storage unit and the controller unit constituting the data storage apparatus do not cause troubles to read/write operation even under a shock of 200 G or above.

The seventh feature (17) of the invention is that in items (1) to (16) the connector of the controller unit cannot be commonly used as the connector for the storage unit, and the storage unit and the controller unit are different at least in construction so that the connector of the controller unit can be prevented from being connected by mistake to the connector for the storage unit.

The eighth feature (18) of the invention is that in items (1) to (16) the connector of the controller unit can also be inserted in the connector for the storage unit, and the connector of the storage unit has the same construction as the connector of the controller unit.

The nine feature (19) of the invention is that in items (1) to (16) the storage unit as well as the controller unit has the same 68-pin connector of a size equal to that of the connector for PCMCIA, and the pins not used in the controller unit are used to connect the storage unit, or mechanical unit.

The tenth feature (20) of the invention is that in items (1) to (16) the structure of the storage unit is different in size from that of the controller unit.

The eleventh feature (21) of the invention is that in items (1) to (16) a flexible LSI is used for at least one of the LSIs provided within the structure of the storage unit or the controller unit.

The magnetic disk storage apparatus is now used over an extremely wide range of applications, not only for the external storage unit of the computer but also for other uses.

It is assumed that the storage unit of a head/medium system can have a storage capacity of 650 MB. This storage unit can be used as an external storage unit for work-station or the like if it is connected to the controller unit having a cache memory of 256 kB and a PCMCIA interface. In addition, if the storage unit of 650 MB is combined with the controller unit having an MPEG1-standard circuit system, it can be used as a memory for handling motion picture files of about 70 minutes. Moreover, if the cache capacity is desired to be 120 kB while the storage capacity of 80 MB is satisfactory, a circuit system having a large cache capacity is combined with a mechanical system of 80 MB which is constructed by a low-recording density and inexpensive head/medium system. Conversely, if the storage capacity is desired to be 600 MB while the cache capacity of 32 kB is satisfactory, arbitrary storage unit and controller unit are combined to achieve the desire. That is, this data storage apparatus has excellent extensibility.

In addition, if the storage unit and the controller unit are formed within separate structures, they are separated and for example, only the storage unit in which secret information is previously stored can be carried with the controller unit being left plugged in the slot. In such case, since the structures of the storage unit and the controller unit are each made thin, it is very convenient to carry. Particularly in a sub-note personal computer with slots for PCMCIA type-2 (5.0 mm in thickness), both the storage unit of PCMCIA type-1 (3.3 mm in thickness) and the controller unit with FAX modem function can be very conveniently inserted into the slots. Moreover, since the head/medium system is always kept in the sealed space, high reliability can be assured irrespective of the environment in which the apparatus is used. Furthermore, since the storage unit formed by heads and media is held within a separate structure from the controller unit, the temperature of the atmosphere surrounding the heads and media can be suppressed from rising due to the heat generated from the LSIs. As a result, it is possible to construct a magnetically and mechanically stable data storage apparatus.

In addition to the first to eleventh features mentioned above, the present invention has the following features.

The data storage apparatus of the invention has a first card-type structure in which a storage medium is housed, and a second card-type structure having control means for controlling a plurality of first card-type structures which are different in specification, so that those structures can be manually combined into a single unit and separated freely by a connecting mechanism without any tool.

Specifically, the connecting mechanism is, for example, a latch mechanism which is operated by hand. By this latch mechanism, it is possible to separate and replace, for example, an HDA package having a head disk assembly (HDA) housed therein and a control-card package without any tool such as a screw driver. The latch mechanism can serve to mount and fix the HDA package or release it by use of the slide switch incorporated on the control-card package side. The slide switch also enables the connector on a printed circuit board to engage with the connector incorporated in the HDA package, making electrical connection.

Moreover, the HDA package has ID information provided for HDA type, and this ID information is transmitted through the connector to the control-card package. The circuits within the control-card package read the ID information when the power supply is turned on or at the time of resetting, so that the settings of registers for determining the control operation are made to match the HDA type.

Also, the IC memory package as the first card-type structure having a printed circuit board with a semiconductor memory (IC memory) mounted thereon can be connected to the control-card package by the same mechanism as mentioned above, and can be used as an ATA (AT Attachment) which meets JEIDA (Japan Electronic Industry Development Association)/PCMCIA (Personal Computer Memory Card International Association). In this case, too, the IC memory package has ID information incorporated therein and this ID information is read through the connector by the control-card package when the power supply is turned on or at the time of resetting, for instance, so that the memory package can be used as the ATA card.

According to the card-type storage apparatus of the invention, the control means of the second card-type structure can be used for a plurality of first card-type structures of different specifications, thus making it possible to reduce the cost per bit of a memory device, widen the application field and increase the productivity. In addition, the first type structure can be used as the ATA card.

### BRIEF DESCRIPTION OF THE DRAWINGS

Figs. 1A and 1B are respectively external views of the storage unit and controller unit of the data storage apparatus of a first embodiment of the invention,
Fig. 2 is an external view of a computer body, and the storage unit and controller unit of the data storage apparatus of the embodiment of the invention,
Figs. 3A and 3B are cross-sectional diagrams of the storage unit and the controller unit of the embodiment, respectively,
Fig. 4 is a circuit diagram of the data storage apparatus of the embodiment of the invention,
Figs. 5A and 5B are respectively cross-sectional diagrams of the storage unit and controller unit of the data storage apparatus of a second embodiment having the storage unit with a magnetic disk of 1.3 inch in outer diameter,
Figs. 6A and 6B are respectively cross-sectional diagrams of the storage unit and controller unit of the data storage apparatus of a third embodiment having the storage unit with two magnetic disks of 1.3 inch in outer diameter,
Figs. 7A and 7B are respectively cross-sectional diagrams of the data storage apparatus of a fourth embodiment using three PCMCIA type slots,
Fig. 8 is an exploded perspective view of a card type storage apparatus as a fifth embodiment of the invention,
Figs. 9A, 9B, 9C and 9D are sequential side views of the card type storage apparatus being assembled as the fifth embodiment of the invention,
Figs. 10A, 10B and 10C are sequential conceptional diagrams of the card type storage apparatus being assembled as the fifth embodiment of the invention,
Fig. 11 is a plan view of the construction of a part of the card type storage apparatus as the fifth embodiment of the invention,
Fig. 12 is a perspective view of the construction of a part of the card type storage apparatus as the fifth embodiment of the invention,
Fig. 13 is a block diagram of one example of the construction of the card type storage apparatus as the fifth embodiment of the invention,
Fig. 14 is a perspective view of one example of the card type storage apparatus as a sixth embodiment of the invention,
Fig. 15 is a perspective view of the card type storage apparatus as the sixth embodiment of the invention showing one example of the action,
Fig. 16 is a perspective view of the card type storage apparatus as the sixth embodiment of the invention showing another example of the action,
Fig. 17 is a perspective view of a part of the internal structure of the card type storage apparatus as the sixth embodiment of the invention,
Fig. 18 is a perspective view of another part of the internal structure of the card type storage apparatus as the sixth embodiment of the invention, and
Fig. 19 is a block diagram of one example of the circuit construction of the card type storage apparatus as a seventh embodiment of the invention.

### DESCRIPTION OF THE PREFERRED EMBODIMENTS

### (First embodiment)

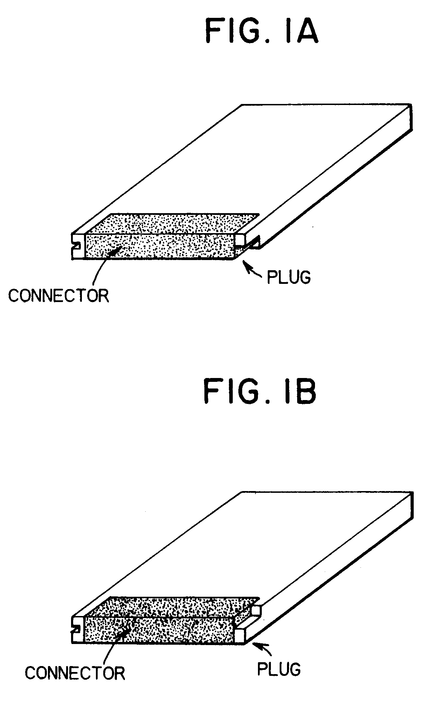

The first embodiment of the invention will be described with reference to Figs. 1A, 1B, and Fig.2 and Figs. 3A and 3B. The data storage apparatus of the invention includes a storage unit and a controller unit which are respectively constructed within separate structures of 3.3 mm in thickness, 54 mm in width and 106.8 mm in length as shown in Figs. 1A and 1B. The storage unit and the controller unit can be carried separately, and each of them has a connector which meets the PCMCIA specification. One connector of each unit can be inserted into the PCMCIA type-1 slot, two connectors into the PCMCIA type-2 slots or three connectors into the PCMCIA type-3 slots.

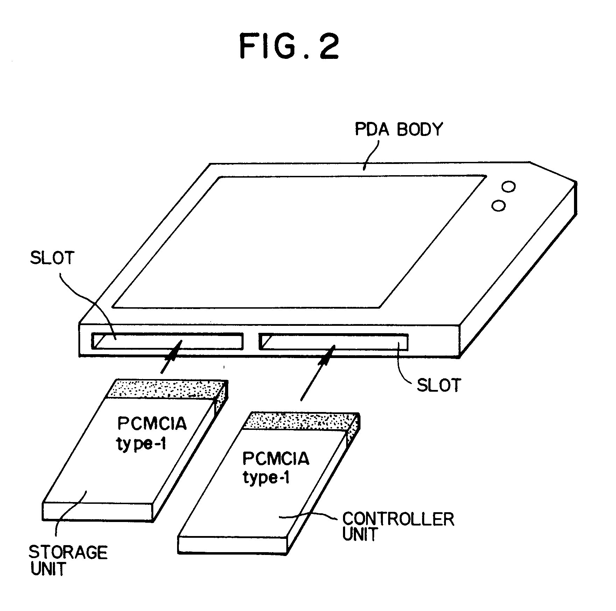

Fig. 2 is an external view of a computer body, and the storage unit and controller unit of the data storage apparatus of the invention, showing how to use the storage apparatus when a PDA (Personal Digital Assistant) is used as the computer body. As shown in Fig. 2, the storage unit and the controller unit of the data storage apparatus of the invention can be inserted into respective ones of the two PCMCAI type-1 slots provided in the side of the PDA body , and used as an external storage apparatus of the PDA. In addition, since two PCMCAI type-1 slots are arranged laterally as shown in Fig. 2, the thickness of the computer body can be greatly reduced to 5 mm or below.

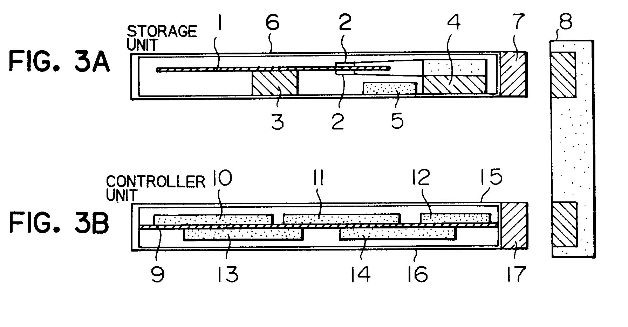

The cross-sections of the storage unit and controller unit are as shown in Figs. 3A and 3B, respectively. The storage unit structure has incorporated therein a magnetic disk 1 of 1.89 inches in outer diameter and two magnetic heads 2 by which both sides of the magnetic medium can be accessed. When one side of the disk is accessed, only one of the heads is used. The thickness of the magnetic disk 1 is about 0.386 mm, and that of the head sliders 2 is 0.3 mm. The thickness of a cover 6 is about 0.4 mm. The storage unit structure has the head/medium, a spindle 3, an actuator 4 and an R/W IC 5. Since the R/W IC 5 is provided near the heads, noise can be reduced and also the high frequency characteristic can be maintained satisfactory. If the R/W IC 5 is constructed by a flexible LSI and mounted on the actuator 4, the high frequency characteristic can be further improved. In addition, a connector 7 for PCMCIA is mounted on the end of the storage unit structure, so that the storage unit can be connected through a slot 8 provided in the computer body to the controller unit inserted in the computer. This connector 7 has only the terminals necessary for the connection to the controller unit.

The cross section of the controller unit is shown in Fig. 3B. The controller unit is constructed within a structure of which the dimensions are the same as the storage unit structure, or 3.3 mm in thickness, 54 mm in width and 106.8 mm in length. This controller unit has the same function for controlling the storage unit as the normal disk storage apparatus, and it is formed of an LSI for encoding and decoding a servo signal, an LSI for signal processing and a cache memory. A printed circuit board 9 is about 0.4 mm thick and has a dual layer wiring structure. On this circuit board 9, there are mounted an LSI 10 for signal processing, an LSI 11 for encoding and decoding a servo signal, an LSI 12 for controlling head position, a controller LSI 13 and a spindle/VCM driving LSI 14. The thickness of a cover 15 of the controller unit structure is the same as that of the storage unit, or about 0.4 mm, and the thickness of a base 16 is also about 0.4 mm. A connector 17 for PCMCIA is provided on the end of the controller unit and has the same function (68 pins) as the normal PCMCIA connector. Since the controller unit is necessary to be connected to the storage unit through the slots 8, unnecessary ones of the 68 pins are used for this connection. The controller unit and the storage unit use common ground. Although the controller unit and the storage unit are inserted into the slots 8 of the computer body so as to be used as a magnetic disk storage apparatus, the plugs of the controller unit and storage unit are different in shape as shown in Figs. 1A and 1B. Therefore, it can be prevented that the controller unit is inserted into the slot for the storage unit by mistake. In addition, if a servo function to follow the eccentricity of the disk is added to the controller unit so that the disk can be prevented from being eccentric not to be written or read when the disk storage apparatus is dropped by mistake, the resistance to shock can be improved up to 200 G or above.

The revolution rate of the disk 1 at the time of write/read operation is 3200 rpm, and the frequency is set to 16 MHz. The recording layer formed on the magnetic disk 1 is made of CoCrPt, the coercivity is 2800 Oe, and the remanence-thickness product Br·t is 75 G·µm. The magnetic heads 2 are dual element heads having inductive elements for writing and magneto-resistive elements for reading. The combination of the heads and media can achieve an areal recording density of 2 Gb/in², and thus the storage capacity of the storage unit is 650 MB.

Although the cache capacity of the controller unit used in this embodiment is set to be 256 kB, it may be arbitrary depending on a balance between performance and cost of apparatus. Also, in this embodiment, although the data storage apparatus is assumed to be used as the external storage apparatus for the computer, the storage unit (of which the storage capacity is 650 MB) is combined with the controller unit having, for example, a data compressing and expanding function which meets MPEG1 specification, thereby making it possible to be used as an image data files capable of handling motion pictures of about 70 minutes.

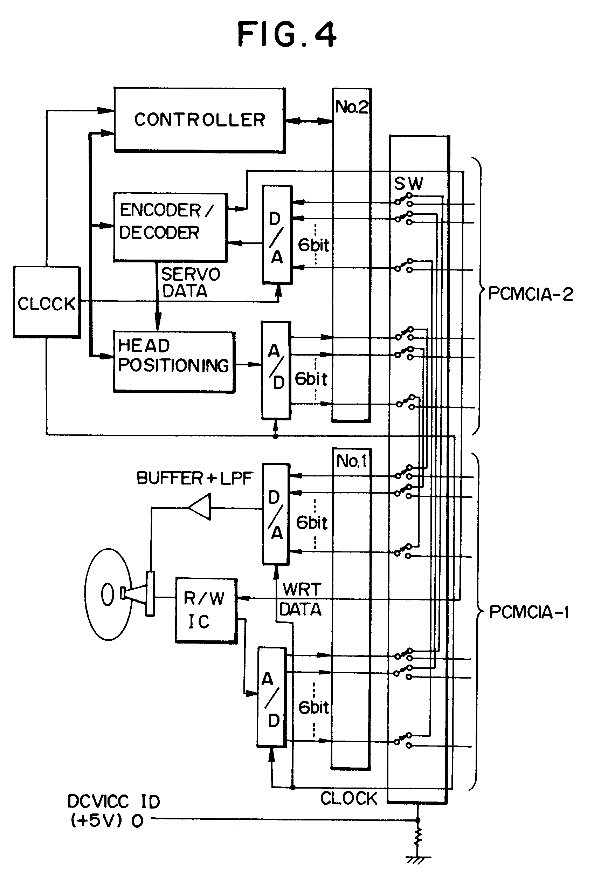

Fig. 4 is a block diagram of the circuit arrangement of the data storage apparatus of the invention. In this invention, since the storage unit and the controller unit are connected through the connectors for PCMCIA, the signal to be transmitted therebetween is converted into a digital signal. Moreover, in this embodiment, 15 pins of 68 pins for PCMCIA are used to connect the storage unit and the controller unit. The PCMCIA slots No. 1 and No. 2 can be used for magnetic disks by making the device ID in Hi-state so that the unused pins of the slots No. 1 and No. 2 are connected. If the device ID is in Low-state, the unused pins of the slots No. 1 and No. 2 are open so that the PCMCIA slots can be used for magnetic disks. The A/D and D/A conversion is not always necessary, but only analog signal can be transmitted between the storage unit and the controller unit.

### (Second embodiment)

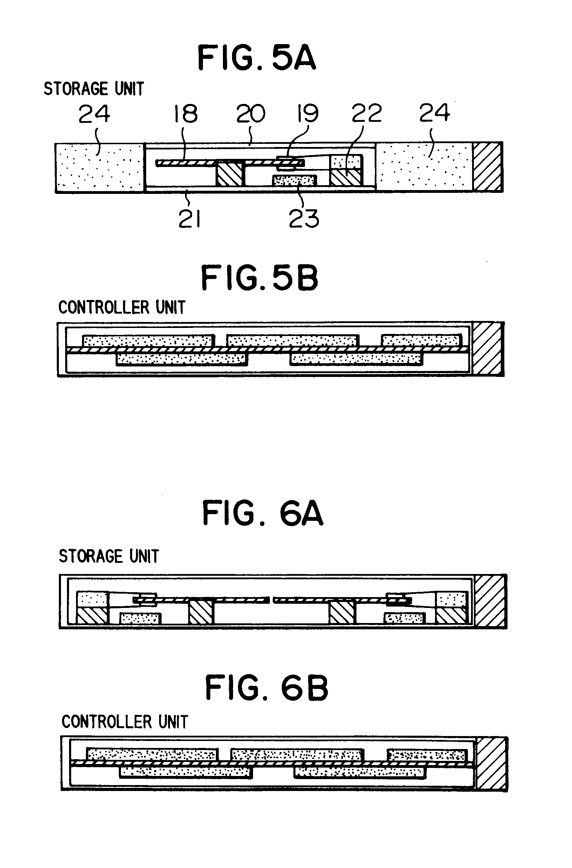

The second embodiment of the invention will be described with reference to Figs. 5A and 5B. The dimensions of the storage unit and controller unit of this embodiment are the same as in the first embodiment, or 3.3 mm in thickness, 54 mm in width and 106.8 mm in length. The storage unit structure includes a single magnetic disk 18 of 1.3 inches in outer diameter, and two magnetic heads 19 by which both sides of the magnetic medium can be accessed. Of course, only one side can be accessed by any one of the heads. The magnetic disk 18 is 0.386 mm thick, and the head slider 19 is 0.3 mm thick. The thickness of a cover 20 and a base 21 is 0.4 mm. The storage unit structure includes the head/medium, an actuator 22 and an R/W IC 23. In addition, a shock absorption cover 24 is mounted around this storage unit. This cover 24 is elastically deformed by an external shock to buffer the shock to the storage unit including the heads and medium. As a result, this storage unit is designed to withstand a shock of 1000 G. The controller unit has the same performance as in the first embodiment. The controller unit is originally designed to withstand a shock of 1000 Gs.

The revolution rate of the disk in the write/read operation is 3200 rpm, and the recording frequency is 8 MHz. The recording layer on the magnetic disk 18 is made of the same material of CoCrPt as in the first embodiment, the coercivity is 2800 Oe, and the remanence-thickness product Br·t is 75 G·µm. The magnetic heads 19 are the same type as in the first embodiment, or dual element heads which have inductive elements for writing and magnetoresistive elements for reading. By the combination of the heads and the medium, it is possible to achieve an areal recording density of 2 Gb/in². The storage capacity of the storage unit, or mechanical unit is 325 MB.

### (Third embodiment)

In this embodiment, two 1.3-inch magnetic disks are provided in the storage unit and data is transferred in parallel between the disks. Figs. 6A and 6B show the third embodiment of the invention. The dimensions of the storage unit are 3.3 mm in thickness, 54 mm in width and 106.8 mm in length. This storage unit structure includes two magnetic disks of 1.3 inches in outer diameter, and four magnetic heads by which both sides of each of the heads can be accessed. Each of the magnetic disks is about 0.386 mm thick, and the head slider is 0.3 mm thick. The cover is 0.4 mm thick. The R/W IC is provided for on each of the disks. The revolution rate of the disks in the write/read operation is 3200 rpm, and the recording frequency is 8 MHz. The magnetic recording layers on the magnetic disks are made of a material CoCrPt, the coercivity is 2800 Oe, and the remanence-thickness product Br·t is 75 G·µm. The magnetic heads are dual element heads which have inductive elements for writing and magnetoresistive elements for reading. An areal recording density of 2 Gb/in² can be achieved by the combination of the heads and media. The storage capacity is 325 MB. The data transfer rate is 5 MB/s which is twice as high as that in the second embodiment. This data storage apparatus, instead of the parallel transfer of data, may be used as a storage apparatus of 650 MB storage capacity and 2.5 MB/s transfer rate by the combination of the storage unit and the controller unit. In addition, the storage unit in this embodiment can be combined with a low power consumption controller unit for a low revolution rate of 1600 rpm and for writing data at 4 MHz. In this case, the consumption power can be reduced to about 1/4 as low as that at a revolution rate of 3200 rpm.

### (Fourth embodiment)

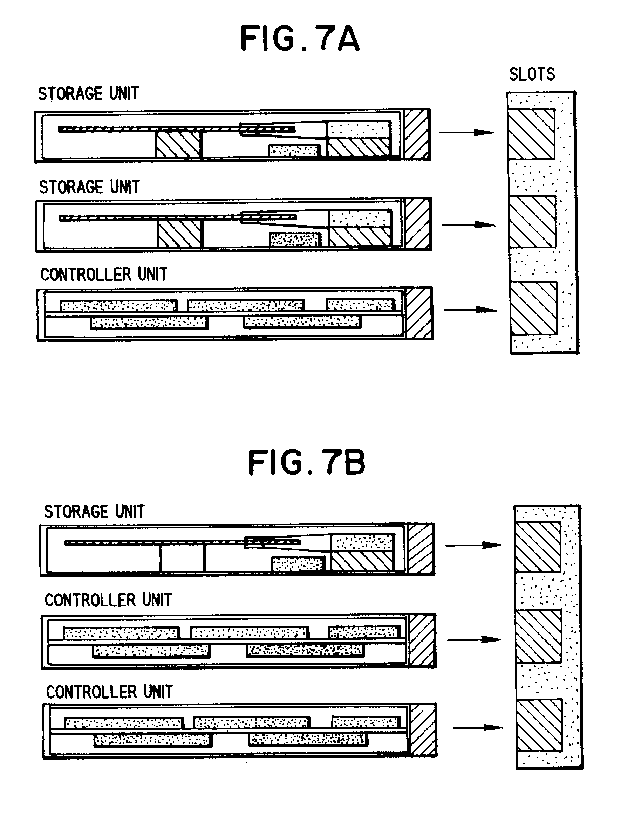

Figs. 7A and 7B show the fourth embodiment. Fig. 7A shows the case in which one controller unit is inserted in one of the PCMCIA type-3 slots and two storage units are inserted in the other slots. In this case, by selecting a proper controller unit, the storage capacity or the transfer rate can be increased to twice as large as that when one storage unit is used. Fig. 7B shows the case in which one storage unit is inserted in one of the PCMCIA type-3 slots and two controller units are inserted in the other slots. In this case, the cache capacity can be increased to improve the performance. Although the dimensions of the storage units and the controller units in this embodiment are 3.3 mm in thickness, 54 mm in width and 106.8 mm in length, the dimensions of the storage units are not necessary to be the same as those of the controller units.

### (Fifth embodiment)

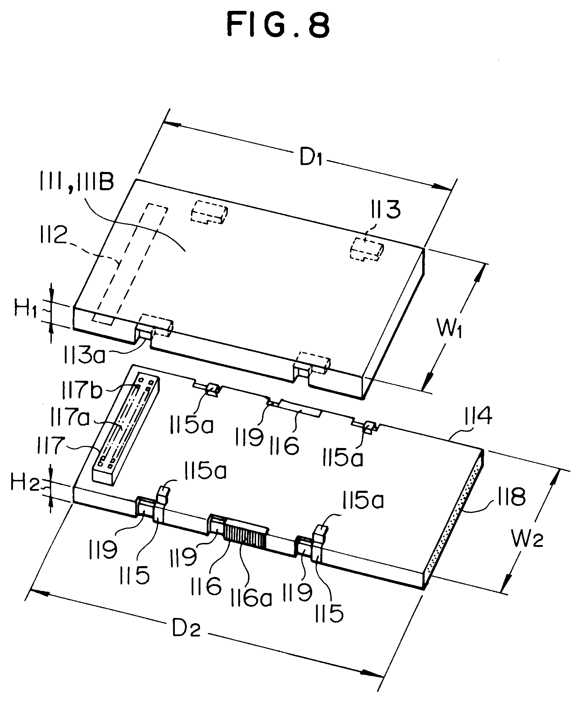

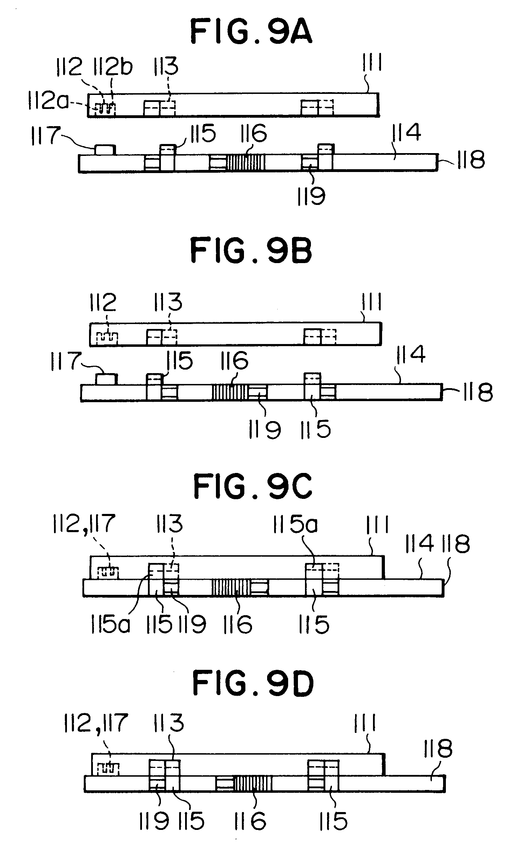

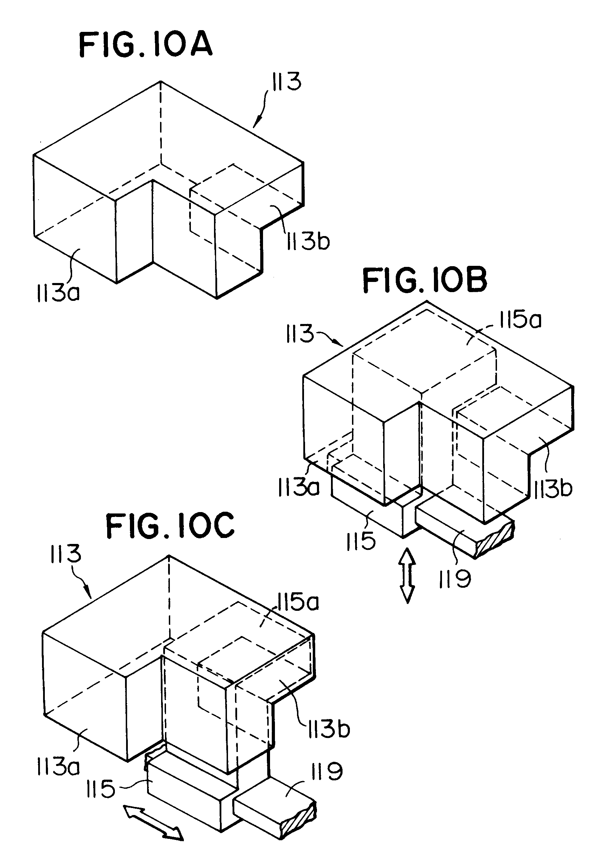

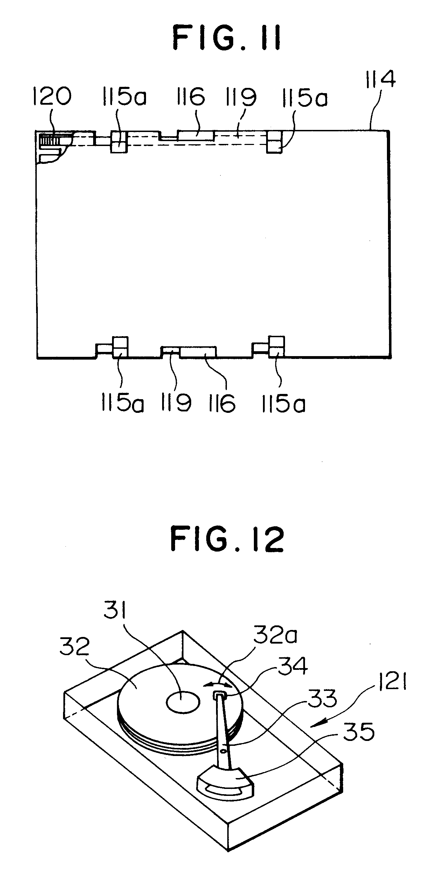

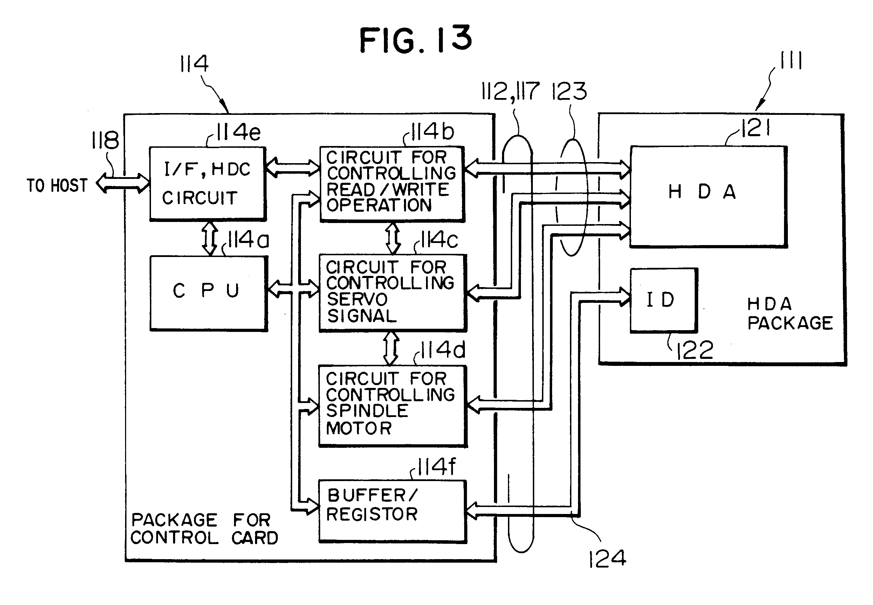

Fig. 8 is an exploded perspective view of the card type storage apparatus of the fifth embodiment of the invention. Figs. 9A to 9D are sequential side views of the apparatus being assembled. Figs. 10A to 10C are sequential conceptional diagrams of the apparatus being assembled. Fig. 11 is a plan view of the construction of part of the apparatus. Fig. 12 is a perspective view of a part of the apparatus. Fig. 13 is a block diagram of an example of the internal arrangement of the apparatus.

This embodiment is a card type magnetic disk data storage apparatus as one example of the card type data storage apparatus. The card type magnetic disk storage apparatus of this embodiment includes two portions of head disk assembly (HDA) package 111 and control-card package 114. These two portions are electrically connected by a connector 112 (male) provided on HDA package-111 side and a connector 117 (female) provided on the control-card package-114 side. A plurality of latches 115 provided on both side edges of the control-card package 114 are inserted or engaged in the corresponding ditches, 113 for latch, of the HDA package 111, thereby mechanically combining both packages.

The connector 112 on the HDA package-111 side has a concave portion 112a provided to face the connector 117 and a plurality of electrode pins 112b perpendicularly projected within this concave portion 112a. The connector 117 on the control-card package-114 side has a convex portion 117b projected from the surface of the control-card package 114 and a plurality of electrodes 117a which are provided within the convex portion 117b and in which the plurality of electrode pins 112b of the connector 112 are inserted under pressure.

The latches 115 are driven by slide switches 116 each having a notch 116a which is operated from the external by the user, thereby connecting or disconnecting the HDA package 111 and the control-card package 114.

The connector 118 provided at one end of the control-card package 114 of the combined control-card package 114 and HDA package 111 is inserted in a slot which is provided in a portable information processor not shown, for example, a type III PC card slot which meets PCMCIA specification.

The size of each part of this embodiment will be given below. The HDA package 111 has a width W1 of 54.0 mm, a depth D1 of 70.0 mm and a thickness H1 of 7.5 mm. The control-card package 114 has a width W2 of 54.0 mm, a depth D2 of 85.6 mm and a thickness H2 of 3.0 mm. When both packages are combined into a unitary body, the single body has a width W (= W1 = W2) of 54.0 mm, a depth D (= D2) of 85.6 mm and a thickness H (= H1 + H2) of 10.5 mm, which meet the size of the type III PC card of PCMCIA specification.

The slide switch 116 and two latches 115 provided on each side are fixed on a common shaft 119 which is built in each side of the control-card package 114 as shown in Fig. 11. The shaft 119 is always urged to be pushed to the right in Fig. 11 by a spring 120. When no external force is exerted, the latches 115 (slide switch 116) are fixed at certain positions by the action of the spring 120 as described later. When the slide switch 116 is moved to the left in Fig. 11 against the force of the spring 120, the latches can be released from the fixed state.

One example of the internal construction of each of the HDA package 111 and the control-card package 114 will be described with reference to Figs. 12 and 13.

The HDA package 111 has a head disk assembly 121 and an ID information storing area 122 (see Fig. 13). The head disk assembly 121 includes, as for example shown in Fig. 12, a certain number of magnetic disks 32 driven to rotate by a spindle motor 31, a magnetic head 34 which is supported by one end of a head arm 33 and which makes write/read operation on the magnetic disks 32 and an actuator 35 which moves and locates the magnetic head 34 of the head arm 33.

The ID information storing area 122 is formed of, for example, a read only memory which has already stored therein information of the recording density and number (storage capacity) of the magnetic disks 32 in the head disk assembly 121. This information is supplied as an ID signal 124 to the control-card package 14 through the connectors 112 and 117. The ID information storing area 22 is not limited to a memory, but may be formed of a circuit element by which the signal lines for the ID signal 124 in the connectors 112 and 117 are made in a particular logic state or terminated state.

The control-card package 114 includes a central processing unit 114a (CPU) for controlling the whole arrangement, and elements for making various different control operations on the head disk assembly 121 under the control of the central processing unit 114a, or a read/write control circuit 114b, a servo control circuit 114c, a spindle motor control circuit 114d and an HDC interface control circuit 114e for controlling that information is received from or transmitted to the host side connected through the connector 118. The read/write control circuit 114b makes transfer control of read/write data through an HDA interface 123. The servo control circuit 114c controls the actuator 35 through the HDA interface 123 to move and position the magnetic head 34 on the magnetic disks 32 in a seek direction 32a. The spindle motor control circuit 114d controls the magnetic disks 32 to rotate through the HDA interface 123.

In this case, the control-card package 114 also includes a buffer register 114f to which reference is made by the central processing unit 114a and the various control circuits under the control of the CPU. The ID signal 124 read as control information from the ID information storing area 122 provided on the HDA package-111 side is set in this buffer register 114f. Thus, the control-card package 114 can make proper control operation according to the specification of the head disk assembly 121 of the HDA package 111.

One example of the action of the card type magnetic disk storage apparatus of this embodiment will be described below.

First, as shown in Fig. 9A, the HDA package 111 with the connector 112 and a plurality of latch ditches 113 down is faced to the control-card package 114 with the connector 117 and a plurality of latches 115 up so that the connector 112 and the ditches can be opposed to the connector 117 and the latches, respectively.

Then, as shown in Fig. 9B, the slide switch 116 is moved by the operator to the left in Fig. 9B against the force of the spring 120, so that a plurality of latches 115 interlocked with the slide switch 116 through the shaft 119 come just under the openings, 113a of the corresponding ditches 113 and are kept in that state.

Thereafter, as shown in Fig. 9C, the control-card package 114 and the HDA package 111 are combined under the condition that they are maintained in this state so that the connector 117 can be engaged in the connector 112 and that the latches 115 can be inserted into the openings 113a of the corresponding ditches 113, respectively. The engaged state of the latches 115 and ditches 113 is as shown in Fig. 10B.

When the operator releases the slide switch 116 from the fixing position, the latches 115 are moved to the right in Fig. 9 by the force of the spring 120, and the engagement nails, 115a of the latches 115 are engaged with the convex portions 113b of the ditches. The engaged state of the latches 115 and the ditches 113 is as shown in Fig. 10C.

Thus, the HDA package 111 and the control-card package 114 can be combined and stably fixed into the card type magnetic disk storage apparatus by a sequence of operations without any tool. The packages can be separated by the reverse operations of the sequence, Figs. 9A to 9D. The card type magnetic disk storage apparatus formed of the HDA package 111 and the control-card package 114 can be loaded in an arbitrary information processor by inserting the connector 118 of the control-card package 114 into its PCMCIA type III slot.

Thus, according to the card type storage apparatus of this embodiment, since the control-card package 114 can be used together with the HDA package 111 of different type, the cost per bit of the card type storage apparatus including the control-card package 114 can be reduced. In addition, even if the HDA package 111 is replaced by a larger-capacity one, the same control-card package 114 can be used together with it, and hence the performance of the apparatus can be improved with the lowest cost by replacing this component.

### (Sixth embodiment)

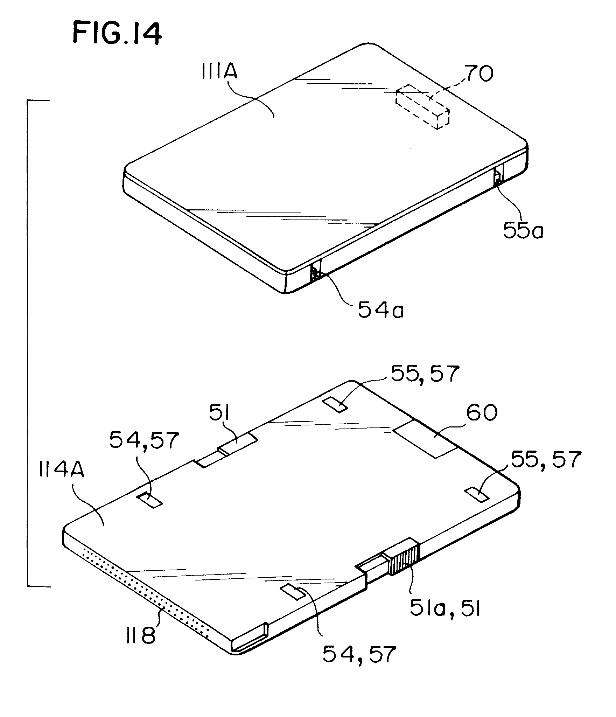

Fig. 14 is a perspective view of one example of the card type magnetic disk storage apparatus as another embodiment of the invention.

In this sixth embodiment, the structure for the mechanical coupling of a HDA package 111A and a control-card package 114A and the construction of the connectors for electrically connecting both are different from those in the fifth embodiment.

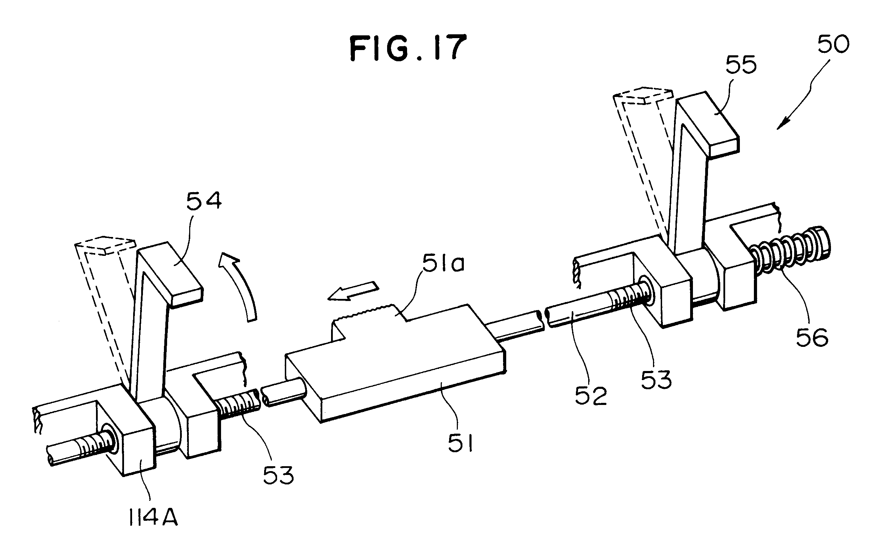

A latch mechanism 50 as illustrated in Fig. 17 is built in each of both side edges of the control-card package 114A. Each of the latch mechanisms 50 has a slide switch 51 with a notch 51a for manual operation, a shaft 52 which is linearly driven in the axial direction by this slide switch 51, screw portions 53 formed on the shaft 52, a pair of latches 54 and 55 which screw in engagement with the screw portions 53 to rotate around the shaft 52 as the shaft 52 is moved straight, and a spring 56 by which the shaft 52 can be always urged to be pulled to the right in Fig. 17. Each of the screw portions 53 is formed of, for example, a large number of threads so that the latches 54, 55 can be rotated by a great amount when the shaft 52 is slightly displaced in the axial direction. The screw portions 53 of the latch mechanisms 50 built in the sides of the control-card package 114A are provided to be oriented in the opposite direction to each other so that when the slide switches 51 are displaced in the same direction, the latches 54, 55 as a pair can be rotated in the opposite direction to each other.

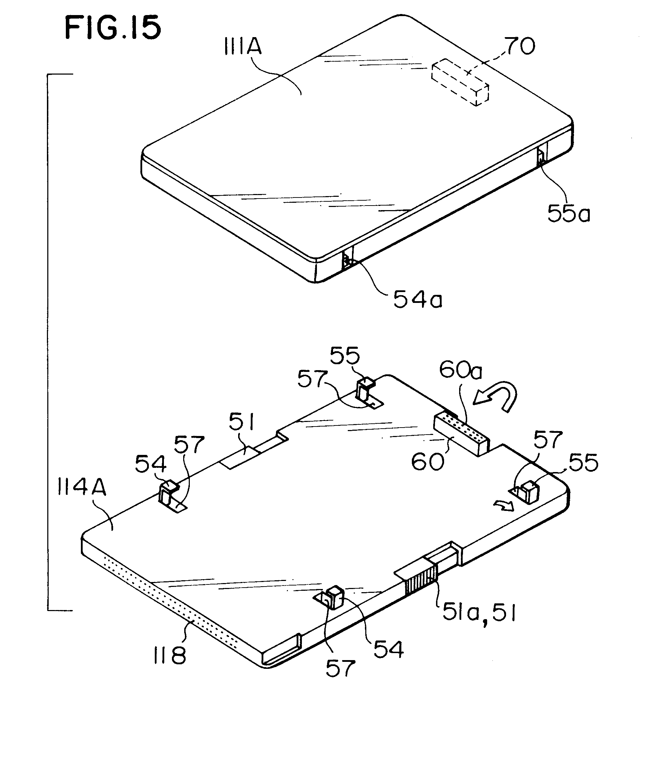

When no external force is exerted on the slide switch 51, the latch 54, 55 is pulled into the inside of a hole 57 bored in the surface of the control-card package 114A by the force of the spring 56 exerted on the shaft 52 as shown in Fig. 14. When the slide switch 51 is pushed, the latch is projected through the hole from the surface of the control-card package 114A as shown in Fig. 15. In addition, the latch 54, 55 is rotated until it comes to a position (as indicated by the broken lines in Fig. 17) that is outside the perpendicular position (as indicated by the solid lines in Fig. 17) relative to the surface of the control-card package 114A, or so that it can be tilted by an angle of, for example, 30 degrees or above.

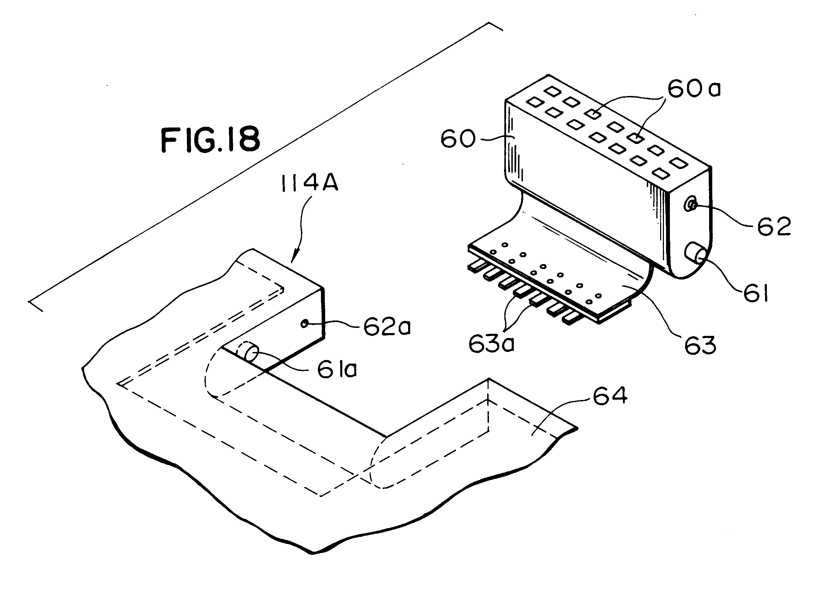

Moreover, as shown in Fig. 18, a female connector 60 is mounted on one end of the control-card package 114A so that an array of a plurality of electrodes 60a for electrical connection can be raised perpendicularly from the surface of the control-card package 114A by the manual operation. In other words, rotating pivots 61 provided on both sides are engaged in the shaft-holes 61a provided on the control-card package 114A whereby the connector 60 can be mounted on the control-card package 114A to be integral and rotatable. In addition, fixing projections 62 are respectively provided on both sides of the connector 60. These projections 62 are engaged in fixing holes 62a which are formed in the control-card package-114A side so that the connector 60 can be mounted to be flush with the surface of the control-card package 114A as shown in Fig. 14. The engagement force between the fixing projections 62 and the fixing holes 62a is so adjusted that they can be easily disengaged by the manual operation but never disengaged without external force.

The connector 60 is electrically connected to a printed circuit board 64 on the control-card package 114A through connection terminals 63a of a flexible printed circuit 63 (FPC) in such a manner that the tilting operation of the connector 60 relative to the control-card package 114A can be prevented from being restricted.

In addition, the connector 118 is provided on the opposite end of the control-card package 114A to the connector 60.

The HDA package 111A has ditches 55a, 55a for latch provided on both sides at the positions corresponding to the latches 54, 55 of the latch mechanism 50. Thus, the latches 54, 55 projected from the surface of the control-card package 114A are engaged in those ditches, respectively.

Also, a male connector 70 of the same structure as the connector 112 in the fifth embodiment is provided on the surface of the HDA package 111A to face the control-card package 114A in order to engage in the connector 60 on the control-card package-114A side.

A description will be made of an example of the procedure for assembling the card type magnetic disk storage apparatus of this embodiment. When the HDA package 111A and the control-card package 114A are separated, no projections appear on the HDA package 111A. In addition, on the control-card package 114A, a plurality of latches 54 and 55 are pulled within the inside of the holes 57, and the connector 60 is fallen to be flush with the surface of the control-card package 114A, or there are no projections.

For the assembly, first, the connector 60 of the control-card package 114A is manually tilted, or raised to be perpendicular to the surface of the control-card package 114A which is to be opposed to the HDA package 111A.

Then, the slide switches 51 are manually moved against the forces of the springs 56 in the longitudinal direction of the control-card package 114A (away from the connector 60) so that a plurality of latches 54 and 55 are projected through the holes 57 to the outside and until they are tilted outward from the perpendicular position relative to the surface of the control-card package 114A (as indicated by the broken lines in Fig. 17), and the slide switches 51 are kept at that position. Fig. 15 shows this state.

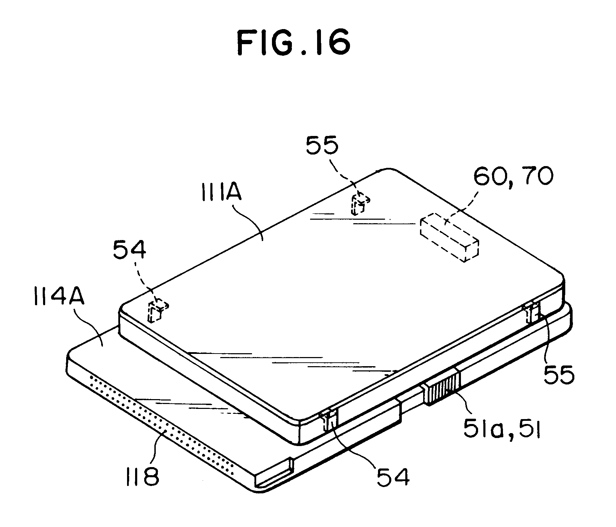

Thereafter, the HDA package 111A is made in intimate contact with the control-card package 114A so that the connectors 60 and 70 are engaged with each other. In addition, when the slide switches 51 are released from the holding state, the shafts 52 are moved by the forces of the springs 56 in the opposite direction to when the manual operation is made, or to become close to the connector 60. At this time, the latches 54 and 55 are tilted to be perpendicular to the surface of the control-card package 114A (namely, to become close to the sides of the HDA package 111A), and stopped at the positions where they can be engaged in the corresponding ditches 54a and 55a on the sides of the HDA package 111A. Thus, the latches and the ditches are maintained in the engaged state by the forces of the springs 56. Therefore, as illustrated in Fig. 16, the HDA package 111A and the control-card package 114A can be mechanically and electrically connected and fixed to be integral.

The integrally combined HDA package 111A and control-card package 114A are loaded together in, for example, a portable information processor by inserting the plug connector 118 of the control-card package 114A into its PC card type III slot.

In this way, by manually operating the slide switches 51 of the latch mechanisms 50, it is possible to integrally combine the HDA package 111A and the control-card package 114A with ease without any tool. Moreover, since the connector 60 on the control-card package 114A can be folded down not to be projected from the surface of the control-card package 114A, a large number of control-card packages 114A can be collectively handled with ease and orderly placed in a small space.

### (Seventh embodiment)

Although in the fifth and sixth embodiments the control-card packages 114 and 114A are respectively integrally connected to and control the HDA packages 111 and 111A with the head disk assembly 121 built in, they may be connected to and control an IC memory card package 111B including an IC memory which is a storage medium of a semiconductor memory as described below. The IC memory card package 111B will hereinafter be described with reference to the HDA package 111 of Fig. 8 because its external appearance and shape and mechanical and electrical connection methods are the same as those of the HDA package 111.

Although the circuits of the control-card package 114 can be arranged to be exclusive for the IC memory card, it may be designed for the function of ATA card proposed in JEIDA/PCMCIA. In this case, an interface signal line exclusive for ATA card is added to the circuits of the control-card package 114 for the head disk assembly 121 mentioned in the fifth embodiment. Thus, the control-card package 114 can be used to control both the HDA package 111 including the head disk assembly 121 and the IC memory card package 111B including the IC memory.

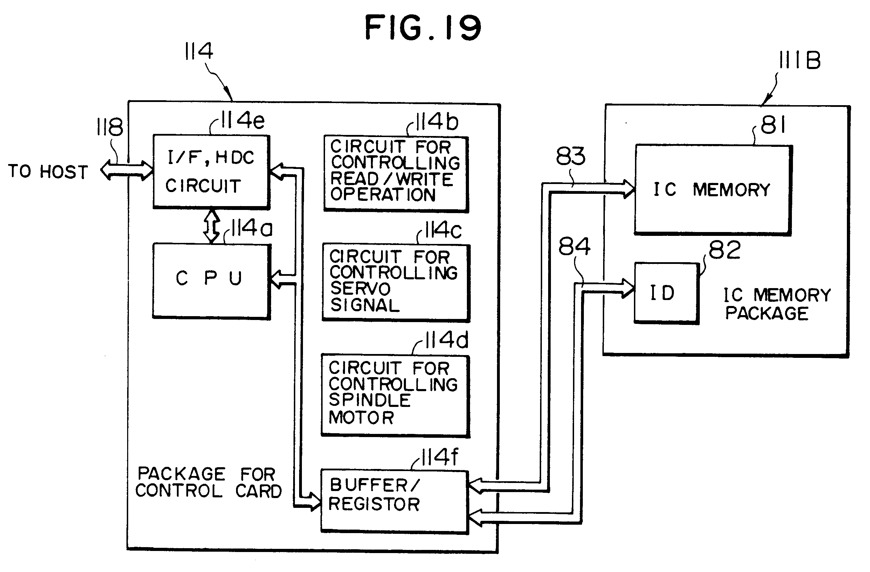

Fig. 19 is a block diagram of one example of the circuit arrangement of the control-card package 114 and IC memory card package 111B in this embodiment.

The IC memory card package 11B includes an IC memory 81 as a storage medium. This IC memory 81 is formed of, for example, DRAM, or EEPROM capable of simultaneous erasing. In addition, an ID information storing area 82 has stored therein information concerning the specifications of the kinds of the storage medium and control methods in the IC memory card package 111B.

The IC memory card package 111B and the control-card package 114 are combined by the engagement of the connectors 112 and 117, and transmit and receive an address control signal and read/write signal 83 for the access to the IC memory 81.

In the same way as in the fifth embodiment, for example, when the power supply is turned on, an ID signal 84 for the type and so on of the IC memory 81 incorporated in the IC memory card package 111B is transmitted through the connectors 112 and 117 to the control card package 114.

The control circuits of read/write control circuit 114b, servo control circuit 114c and spindle motor control circuit 114d in the control-card package 114 are not used when the control-card package 114 is arranged so as to be used in common as the HDA package 111.

Thus, in the seventh embodiment, since the control-card package 114 can be connected to various different storage media to be controlled such as magnetic disk storage unit and IC memory, it is possible to further decrease the cost per bit of the control-card package 114, the card type magnetic disk storage apparatus using the control-card package 114, and the card type IC memory.

Moreover, since the single control-card package 114 can be used for both the HDA package 111 and the IC memory card package 111B, it will not be necessary to purchase another type of the control-card package 114 if the HDA package 111 or IC memory card package 111B is additionally purchased. Thus, a higher-performance storage unit can be purchased at low cost.

Thus, according to this invention, it is possible to produce at low cost an ultra-thin portable magnetic disk storage apparatus which is easy to handle and has excellent extensibility and very high reliability.

## Claims

1. A data storage apparatus comprising:
a storage unit including at least a magnetic head (12) for read/write operation, a magnetic disk (1) for storing information, a spindle motor (3) for said magnetic disk, an actuator (4) for moving said magnetic head to a desired position on said magnetic disk along the radius direction; and
a controller unit including at least one of a control circuit (12) for head positioning in said storage unit, a controller (13) for read/write control operation, an LSI (11) for encoding and decoding a servo signal, an LSI (10) for signal processing, and a printed circuit board (9); said storage unit and said controller unit being respectively constructed within separate structures in order to be independently carried.

2. A data storage apparatus according to claim 1, wherein said storage unit and said controller unit are connected by a connector (7, 18) mounted on the outside of said data storage apparatus, or on said storage unit or said controller unit.

3. A data storage apparatus according to claim 1, wherein the structure of said controller unit drives at least one structure of said storage unit.

4. A data storage apparatus according to claim 1, wherein the structure of said storage unit drives at least one structure of said controller unit.

5. A data storage apparatus according to claim 1, wherein a cache memory, preferably an IC memory, is provided in the structure of said storage unit or in that of said controller unit.

6. A data storage apparatus according to claim 1, wherein said controller unit has a function other than the magnetic storage function, preferably a communication function or a function of compressing and expanding stored information.

7. A data storage apparatus comprising:
a storage unit including at least a magnetic head (19) for read/write operation, a magnetic disk (18) for storing information, a spindle motor (3) for said magnetic disk, and an actuator (22) for moving said magnetic head to a desired position on said magnetic disk along the radius direction; and
a controller unit including at least one of a control circuit (12) for head positioning in said storage unit, a controller (13) for read/write control operation, an LSI (11) for encoding and decoding a servo signal, an LSI (10) for signal processing, and a printed circuit board (9); said storage unit and said controller unit being respectively constructed within separate structures in order to be independently carried, wherein the structures of said storage unit and said controller unit have the dimensions of 5 mm or below in thickness, 54 mm or below in width, and 85.6 mm or below in length.

8. A data storage apparatus comprising:
a storage unit including at least a magnetic head (19) for read/write operation, a magnetic disk (18) for storing information, a spindle motor (3) for said magnetic disk, and an actuator (22) for moving said magnetic head to a desired position on said magnetic disk along the radius direction; and
a controller unit including at least one of a control circuit (12) for head positioning in said storage unit, a controller (13) for read/write control operation, an LSI (11) for encoding and decoding a servo signal, an LSI (10) for signal processing, and a printed circuit board (9); said storage unit and said controller unit being respectively constructed within separate structures in order to be independently carried, wherein said storage unit of said data storage apparatus includes at least one magnetic disk, at least one actuator, at least one magnetic head, and at least one R/W IC.

9. A data storage apparatus comprising:
a storage unit including at least a magnetic head (19) for read/write operation, a magnetic disk (18) for storing information, a spindle motor (3) for said magnetic disk, and an actuator (22) for moving said magnetic head to a desired position on said magnetic disk along the radius direction; and
a controller unit including at least one of a control circuit (12) for head positioning in said storage unit, a controller (13) for read/write control operation, an LSI (11) for encoding and decoding a servo signal, an LSI (10) for signal processing, and a printed circuit board (9); said storage unit and said controller unit being respectively constructed within separate structures in order to be independently carried, wherein said storage unit of said data storage apparatus includes at least two spindles (3), at least two magnetic disks (18), and at least two actuators (22), and parallel transfer of data can be made by at least said two magnetic disks.

10. A data storage apparatus comprising:
a storage unit including at least a magnetic head (19) for read/write operation, a magnetic disk (18) for storing information, a spindle motor (3) for said magnetic disk, and an actuator (22) for moving said magnetic head to a desired position on said magnetic disk along the radius direction; and
a controller unit including at least one of a control circuit (12) for head positioning in said storage unit, a controller (13) for read/write control operation, an LSI (11) for encoding and decoding a servo signal, an LSI (10) for signal processing, and a printed circuit board (9); said storage unit and said controller unit being respectively constructed within separate structures in order to be independently carried, wherein any one of said controller unit and said storage unit of said data storage apparatus has a PCMCIA interface.

11. A data storage apparatus comprising:
a storage unit including at least a magnetic head (19) for read/write operation, a magnetic disk (18) for storing information, a spindle motor (3) for said magnetic disk, and an actuator (22) for moving said magnetic head to a desired position on said magnetic disk along the radius direction; and
a controller unit including at least one of a control circuit (12) for head positioning in said storage unit, a controller (13) for read/write control operation, an LSI (11) for encoding and decoding a servo signal, an LSI (10) for signal processing, and a printed circuit board (9); said storage unit and said controller unit being respectively constructed within separate structures in order to be independently carried, wherein said storage unit and said controller unit of said data storage apparatus do not cause troubles during read/write operation even under a shock of 200 G or above.

12. A data storage apparatus comprising:
a storage unit including at least a magnetic head (19) for read/write operation, a magnetic disk (18) for storing information, a spindle motor (3) for said magnetic disk, and an actuator (22) for moving said magnetic head to a desired position on said magnetic disk along the radius direction; and
a controller unit including at least one of a control circuit (12) for head positioning in said storage unit, a controller (13) for read/write control operation, an LSI (11) for encoding and decoding a servo signal, an LSI (10) for signal processing, and a printed circuit board (19); said storage unit and said controller unit being respectively constructed within separate structures in order to be independently carried, wherein a connector (7) of said controller unit and a connector (8) of said storage unit are separately and independently provided and said storage unit and said controller unit are different at least in construction so that the connector (17) of said controller unit is prevented from being plugged in the connector (8) of the storage unit by mistake.

13. A data storage apparatus comprising:
a storage unit including at least a magnetic head (19) for read/write operation, a magnetic disk (18) for storing information, a spindle motor (3) for said magnetic disk, and an actuator (22) for moving said magnetic head to a desired position on said magnetic disk along the radius direction; and
a controller unit including at least one of a control circuit (12) for head positioning in said storage unit, a controller (13) for read/write control operation, an LSI (11) for encoding and decoding a servo signal, an LSI (10) for signal processing, and a printed circuit board (9); said storage unit and said controller unit being respectively constructed within separate structures in order to be independently carried, wherein the connector (17) of said controller unit is used in common as the connector (7) of said storage unit, and the connector (17) of said controller and the connector (7) of said storage unit are identical in construction.

14. A data storage apparatus comprising:
a storage unit including at least a magnetic head (19) for read/write operation, a magnetic disk (18) for storing information, a spindle motor (3) for said magnetic disk, and an actuator (22) for moving said magnetic head to a desired position on said magnetic disk along the radius direction; and
a controller unit including at least one of a control circuit (12) for head positioning in said storage unit, a controller (13) for read/write control operation, an LSI (11) for encoding and decoding a servo signal, an LSI (10) for signal processing, and a printed circuit board (9); said storage unit and said controller unit being respectively constructed within separate structures in order to be independently carried, wherein the connector (7) of said storage unit and the connector (17) of said controller unit have 68 pins of the same dimensions as a connector for PCMCIA connector, and the unused ones of said pins of the connector of said controller unit are used for the connection to said storage unit.

15. A data storage apparatus comprising:
a storage unit including at least a magnetic head (19) for read/write operation, a magnetic disk (18) for storing information, a spindle motor (3) for said magnetic disk, and an actuator (22) for moving said magnetic head to a desired position on said magnetic disk along the radius direction; and
a controller unit including at least one of a control circuit (12) for head positioning in said storage unit, a controller (13) for read/write control operation, an LSI (11) for encoding and decoding a servo signal, an LSI (10) for signal processing, and a printed circuit board (9); said storage unit and said controller unit being respectively constructed within separate structures in order to be independently carried, wherein the structure of said storage unit and the structure of said controller unit have different sizes, respectively.

16. A data storage apparatus comprising:
a storage unit including at least a magnetic head (19) for read/write operation, a magnetic disk (18) for storing information, a spindle motor (3) for said magnetic disk, and an actuator (22) for moving said magnetic head to a desired position on said magnetic disk along the radius direction; and
a controller unit including at least one Of a control circuit (12) for head positioning in said storage unit, a controller (13) for read/write control operation, an LSI (11) for encoding and decoding a servo signal, an LSI (10) for signal processing, and a printed circuit board (9); said storage unit and said controller unit being respectively constructed within separate structures in order to be independently carried, wherein at least one of LSIs (5, 10, 11, 12, 13, 14) provided in the structure of said storage unit or the structure of said controller unit is a flexible LSI.

17. A data storage apparatus comprising:
a first card type unit (111) including a storage medium;
a second card type unit (114) including control means for controlling said storage medium; and
a connection mechanism (112, 113, 115, 116, 117, 119) for manually connecting said first and second card type units to be detachable without any tool.

18. A data storage apparatus according to claim 17, wherein said first card type unit (111) is formed by a head disk assembly including a magnetic disk (1, 18) as said storage medium, a magnetic head (2, 19) for read/write operation on said magnetic disk and an actuator (22) for positioning said magnetic head on said magnetic disk, or by a memory package including a semiconductor memory as said storage medium.

19. A data storage apparatus according to claim 17, wherein said first card type unit (111) has information to discriminate the specification of said first card type unit , and said control means of said second card type unit (114) reads said discriminating information, discriminates the kind of said first card type unit on the basis of said information, and switches the control operations.
